# EUROPÄISCHE PATENTSCHRIFT

(11) **EP 2 965 264 B1**
(45) Veröffentlichungstag und Bekanntmachung des Hinweises auf die Patenterteilung: **23.05.2018**
(21) Anmeldenummer: 14707774.7
(22) Anmeldetag: 04.03.2014
(51) Int. Cl.: G06K 13/08

(54) **ELEKTRONISCHES GERÄT MIT EINEM KARTENLESER UND EINER ABDECKUNG FÜR DEN KARTENLESER**
ELECTRONIC DEVICE COMPRISING A CARD READER AND A COVER FOR THE CARD READER
APPAREIL ÉLECTRONIQUE ÉQUIPÉ D'UN LECTEUR DE CARTE ET D'UN CAPOT POUR LE LECTEUR DE CARTES

(30) Priorität: 04.03.2013 DE 102013203650
(43) Veröffentlichungstag der Anmeldung: 13.01.2016
(73) Patentinhaber: Hirschmann Car Communication GmbH, 72654 Neckartenzlingen (DE)
(72) Erfinder: SILVA, David, 72622 Nürtingen (DE)
(74) Vertreter: Greif, Thomas
(86) Internationale Anmeldenummer: PCT/EP2014/054123
(87) Internationale Veröffentlichungsnummer: WO 2014/135514

(56) Entgegenhaltungen:
- US-A1- 2013 034 981

## Beschreibung

Die Erfindung betrifft ein elektronisches Gerät mit einem eine Öffnung aufweisenden Gehäuse, wobei das Gerät einen Kartenleser mit einem Aufnahmeschlitz zur Aufnahme einer Karte aufweist, gemäß den Merkmalen des Oberbegriffes des Patentanspruches 1.

Elektronische Geräte, wie zum Beispiel Geräte für den Empfang von Signalen, deren Verarbeitung und Wiedergabe sind grundsätzlich bekannt. Soll der Betrieb solcher Geräte keinen Beschränkungen unterliegen, sind sie dazu eingerichtet, ohne Zugriffsbeschränkung betrieben zu werden.

Allerdings gibt es elektronische Geräte, die aus verschiedenen Gründen einer Betriebsbeschränkung unterliegen. Um den Berechtigten den Betrieb solcher Geräte zu ermöglichen, ist es bekannt, eine Autorisierung auf einer Karte abzuspeichern bzw. zu hinterlegen, wobei diese Karte in einem Kartenleser in dem elektronischen Gerät eingeführt wird. Aufgrund der auf der Karte hinterlegten Autorisierung ist es möglich, dass dieser Berechtigte das elektronische Gerät betreiben kann, nachdem er die Karte mit seiner Autorisierung in einen Aufnahmeschlitz eines Kartenlesers eingeführt hat.

Für stationäre Anwendungen, beispielsweise bei einem Fernsehgerät zu Hause, reicht es vollkommen aus, die Karte in den Aufnahmeschlitz des Kartenlesers in seine Sollposition zu bringen. In diesem Fall kann die Karte von dem Kartenleser ausgelesen und die Autorisierung festgestellt werden. Nachdem dies erfolgt ist, ist der Betrieb des elektronischen Gerätes durch den Berechtigten möglich.

Neben diesen stationären Anwendungen gibt es auch mobile Anwendungen, bei denen solche elektronische Geräte zum Beispiel in Fahrzeugen angeordnet sind. Beispiele hierfür sind elektronische Geräte zum Empfangen und Wiedergeben von Audio- und/oder Videodaten, mobile Telefongeräte, Navigationsgeräte oder dergleichen. Diese Aufzählung ist nur beispielhaft und nicht abschließend.

Bei dem Einsatz solcher elektronischen Geräte unterwegs, sei es in einem Fahrzeug oder in anderer mobiler Form, kommt es sehr häufig vor, dass aufgrund von Vibrationen, Temperaturschwankungen und dergleichen die in den Aufnahmeschlitz eingesetzte Karte nicht in ihrer Sollposition verbleibt. In Folge der äußeren Einwirkungen, zum Beispiel auch durch Stöße, kann es passieren, dass die Karte aus ihrer Sollposition aus dem Kartenleser vollständig oder nur teilweise herausbewegt wird. Dies bewirkt, dass der Kartenleser die auf der Karte gespeicherten Daten nicht mehr vollständig oder nur noch teilweise auslesen kann und es daher zu Störungen bis hin zum Ausfall des gesamten elektronischen Gerätes kommen kann.

Um diesem Herausbewegen der Karte aus dem Kartenleser entgegenzuwirken, könnte daran gedacht werden, die Führungsmittel, mit denen die Karte in den Kartenleser eingeführt und geführt wird, so zu gestalten, dass hohe Kräfte auf die Karte nicht nur beim Einführen, sondern auch nach dem Einführen auf diese wirken, um diese in ihrer Sollposition innerhalb des Kartenlesers festzulegen. Dies hat jedoch den Nachteil, dass das Einführen und auch das Herausnehmen der Karte aus dem Kartenleser bedienerunfreundlich ist. Insbesondere für den Fall, dass es sich um relativ kleine Karten (zum Beispiel wie die bekannten SIM-Karten für Mobiltelefone) handelt, aber auch Karten in anderen Formaten, kann es für den Bediener nur sehr schwer, wenn nicht sogar gänzlich unmöglich sein, entweder die Karte in den Kartenleser einzuführen oder aber auch die Karte aus diesem herauszunehmen.

Aus der US 2013/034981 A1 ist ein gatzungsgemässes elektronisches Gerät bekannt.

Der Erfindung liegt daher die Aufgabe zugrunde, die eingangs geschilderten Nachteile zu vermeiden. Insbesondere soll ein elektronisches Gerät mit einem Kartenleser bereitgestellt werden, mit dem es möglich ist, dass bei mobilen Anwendungen die in den Aufnahmeschlitz des Kartenlesers eingesteckte Karte dauerhaft in ihrer Sollposition innerhalb des Kartenlesers verbleibt.

Diese Aufgabe ist durch die Merkmale des Patentanspruches 1 gelöst.

Erfindungsgemäß ist vorgesehen, dass zumindest der Aufnahmeschlitz mit einer lösbaren und an dem Gehäuse festlegbaren Abdeckung verriegelt ist. Mit der Abdeckung wird zumindest der Aufnahmeschlitz, gegebenenfalls aber auch Bereiche des Kartenlesers oder sogar des Gehäuses des elektronisches Gerätes um den Aufnahmeschlitz herum derart verriegelt, dass nach dem Einsetzen der Karte in den Kartenleser ein Herausbewegen der Karte aus diesem Kartenleser nicht mehr möglich ist. Um das Einsetzen der Karte in den Aufnahmeschlitz des Kartenlesers zu ermöglichen, wird die Abdeckung lösbar an dem Gehäuse verriegelt, das heißt festgelegt. Die Abdeckung bietet somit den Vorteil, dass sie einerseits lösbar an dem Gehäuse des elektronischen Gerätes festgelegt werden kann. Dadurch ist es möglich, die Abdeckung von dem Gehäuse abzunehmen, um den Aufnahmeschlitz des Kartenlesers freizulegen und dort die Karte einzustecken. Nachdem dies erfolgt ist, kann die Abdeckung an dem Gehäuse wieder festgelegt werden, wodurch zumindest der Aufnahmeschlitz in der Weise verriegelt ist, dass die Karte nicht mehr aus dem Aufnahmeschlitz des Kartenlesers herausbewegt werden kann. Ist die Karte in den Kartenleser eingesetzt und soll sie aus diesem entfernt werden, wird zunächst die Abdeckung von dem Gehäuse entfernt, sodass der Aufnahmeschlitz mit der darin befindlichen Karte zugänglich wird und die Karte entnommen werden kann.

Weiterhin ist durch die erfindungsgemäße Abdeckung der Vorteil gegeben, dass sie einen mechanischen Schutz für den Aufnahmeschlitz darstellt, sodass dadurch auch verhindert wird, dass Verunreinigungen in diesen Aufnahmeschlitz des Kartenlesers eindringen können. Gemäss der Erfindung weist die Abdeckung zwei Seitenteile auf, mit denen die Abdeckung lösbar an dem Gehäuse angeordnet ist. Dadurch wird auf einfache Art und Weise das Abnehmen und Festlegen der Abdeckung an dem Gehäuse des elektronischen Gerätes realisiert. Der Körper der Abdeckung bietet somit eine Grifffläche, um diese Abdeckung handhaben zu können. Mittels der zwei Seitenteile wird die Abdeckung in die Öffnung des Gehäuses des elektronischen Gerätes eingeführt und an diesem festgelegt. Gemäss der Erfindung weist das eine Seitenteil der Abdeckung endseitig eine abgewinkelte Lasche auf. In Ergänzung dazu ist vorgesehen, dass das andere Seitenteil zumindest eine Lasche, vorzugsweise zwei beabstanded zueinander angeordnete Laschen, aufweist. Auf diese Art und Weise lässt sich die Abdeckung nicht nur einfach an dem Gehäuse festlegen, sondern auch einfach wieder von diesem Lösen. Mittels der Laschen an den Seitenteilen kann die Abdeckung über die Seitenteile in die Öffnung in dem Gehäuse des elektronischen Gerätes eingeführt und dort festgelegt werden. Aufgrund dieser Rastverbindungen, die mittels der vorstehend genannten Laschen realisiert sind, lässt sich die Abdeckung schnell und einfach sowohl an dem Gehäuse festlegen als auch von diesem wieder entfernen.

In Weiterbildung der Erfindung weist das zumindest eine Seitenteil, vorzugsweise beide Seitenteile, zumindest einen an dem Gehäuse zur Anlage kommenden Vorsprung auf. Mit diesem einen Vorsprung, aber auch mit mehreren Vorsprüngen, wird sichergestellt, dass die Abdeckung in einer Sollposition an dem Gehäuse des elektronischen Gerätes fixiert werden kann. Die jeweiligen Vorsprüngen an dem jeweiligen Seitenteil sind dabei so angeordnet, dass die Abdeckung mit einer ihrer Flächen, insbesondere ihrer Stirnseite, den Aufnahmeschlitz des Kartenlesers flächig abdeckt, wenn die Abdeckung in ihrer Sollposition an dem Gehäuse des elektronischen Gerätes angeordnet ist.

In Weiterbildung der Erfindung weist die Abdeckung eine Stirnseite auf, die zumindest teilweise, vorzugsweise vollständig, zumindest den Aufnahmeschlitz der Karte abdeckt. Durch diese Stirnseite der Abdeckung ist gewährleistet, dass die Karte in ihrer Sollposition in dem Kartenleser verbleibt. Dies wird dadurch erreicht, dass die Abdeckung mit ihrer Stirnseite zumindest den Aufnahmeschlitz der Karte abdeckt. Im Regelfall wird die Stirnseite nicht nur den Aufnahmeschlitz selber, sondern auch einen Bereich um den Aufnahmeschlitz herum abdecken. Dies hat den Vorteil, dass dadurch das Eindringen zumindest von Verunreinigungen in den Aufnahmeschlitz wirksam verhindert wird.

In Weiterbildung der Erfindung weist die Stirnseite der Abdeckung zumindest eine in Richtung des Aufnahmeschlitzes gerichtete Federlasche auf. Mittels dieser zumindest einen Federlasche wird auf die Karte bzw. auf den Aufnahmeschlitz eine zielgerichtete Kraft ausgeübt, mit der bewirkt wird, dass auch bei Vibrationen, Temperaturschwankungen oder dergleichen verhindert wird, dass sich die Karte aus ihrer Sollposition innerhalb des Kartenlesers bewegen kann. Dennoch sind geringstmögliche Bewegungen der Karte innerhalb des Kartenlesers möglich, wobei diese geringstmöglichen Bewegungen den eigentlichen Betrieb der Karte nicht beeinträchtigen.

Ergänzend dazu weist die zumindest eine Federlasche endseitig eine Abwinklung auf. Durch diese Abwinklung entsteht ein leicht bogenförmiger bzw. abgerundeter Bereich, der auf den Aufnahmeschlitz bzw. auf die in dem Aufnahmeschlitz befindliche Karte wirkt, um unnötigen mechanischen Abrieb an dieser Berührungsstelle zu vermeiden.

In Weiterbildung der Erfindung ist die Abdeckung als ein Stanzbiegeteil ausgebildet. Dies bietet den Vorteil, dass die gewünschte Form der Abdeckung, insbesondere mit den vorstehend beschriebenen Laschen, Abwinklungen und dergleichen, schnell, einfach und unkompliziert aus Blechmaterial hergestellt werden kann. Dies ist insbesondere dann von Vorteil, wenn die Abdeckung als funktionales Bauteil ausgebildet und eingesetzt werden soll, es gleichzeitig aber nicht auf das Design ankommt.

In Weiterbildung der Erfindung stehen die Abdeckung und eine Stirnseite des Kartenlesers über die eine Seite des Gehäuses des elektronischen Gerätes über. Der Kartenleser ist dabei durch die Öffnung in dem Gehäuse, insbesondere in einer Seitenwand des Gehäuses des elektronischen Gerätes, nach außen geführt. Dies hat den Vorteil, dass sofort der Aufnahmeschlitz des Kartenlesers für den Benutzer sichtbar ist. Da der Kartenleser über die eine Seite des Gehäuses des elektronischen Gerätes übersteht, ist es erforderlich, dass auch die Abdeckung so geformt und angeordnet ist, dass sie ebenfalls über die zugehörige Seite des Gehäuses des elektronischen Gerätes übersteht. Dabei ist die Abdeckung in besonders vorteilhafter Weise so ausgestaltet, dass sie nicht nur mit ihrer Stirnseite den Aufnahmeschlitz des Kartenlesers überdeckt, sondern alle nach außen überstehenden Bereiche des Kartenlesers überdeckt, um diesen vor äußeren Einflüssen zu schützen.

Ein Ausführungsbeispiel des erfindungsgemäß ausgestalteten elektronischen Gerätes ist in den Figuren gezeigt und im Folgenden beschrieben.

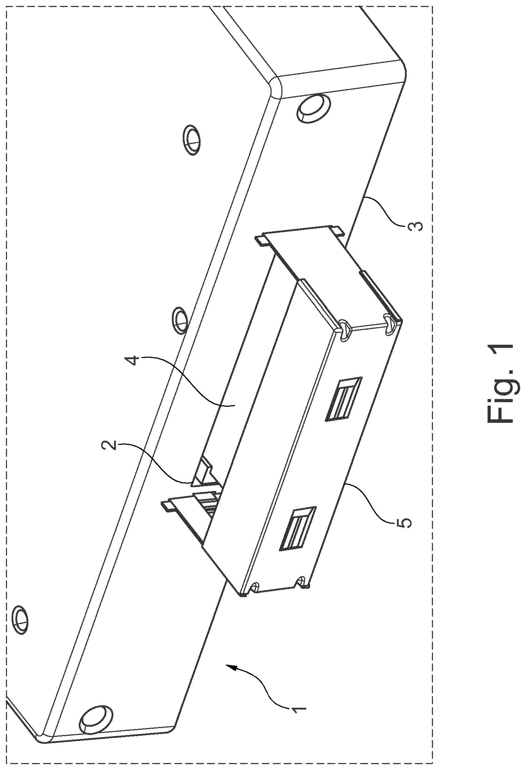

Figur 1 zeigt, soweit im Einzelnen dargestellt, in einer Prinzipdarstellung ein beliebiges elektronisches Gerät. Es handelt sich hierbei um ein elektronisches Gerät für mobile Anwendungen. In einer Wand, insbesondere in einer schmalen Seitenwand des elektronischen Gerätes 1, ist eine Öffnung 2 in einem Gehäuse 3 des elektronischen Gerätes 1 angeordnet. Die Öffnung 2 ist so geformt und dazu ausgebildet, dass durch diese Öffnung 2 ein Kartenleser 4 aus dem Gehäuse 3 des elektronischen Gerätes 1 herausgeführt werden kann. Dabei wird nur ein insbesondere kleinerer Teil des Kartenlesers 4 aus dem Gehäuse 3 herausgeführt, wobei der insbesondere überwiegende Teil des Kartenlesers 4 innerhalb des elektronischen Gerätes 1 angeordnet ist. Elektronisches Gerät und Kartenleser 4 können eine Baueinheit bilden. Daneben ist es denkbar, dass das elektronische Gerät 1 dazu ausgebildet ist, den Kartenleser 4 durch die Öffnung 2 als separate Einheit aufzunehmen.

Wenn der Kartenleser 4 innerhalb des Gehäuses 3 des elektronischen Gerätes 1 in diesem angeordnet ist, ragt bei diesem Ausführungsbeispiel ein kleinerer Teil des Kartenlesers 4 durch die Öffnung 2 aus dem Gehäuse 3 heraus. Dieser aus dem Gehäuse 3 herausragende Teil des Kartenlesers 4 wird von der in Figur 1 gezeigten Abdeckung 5 abgedeckt. Der Kartenleser 4 weist stirnseitig einen Aufnahmeschlitz zur Aufnahme einer nicht dargestellten Karte auf, wobei dieser Aufnahmeschlitz und gegebenenfalls darum herum angeordnete Bereiche des Kartenlesers 4 von der Abdeckung 5 abgedeckt sind.
Figur 1 zeigt den Zustand, bei dem die Abdeckung 5 an dem Gehäuse 3 angeordnet ist. Diese Anordnung ist dabei so ausgeführt, dass die Abdeckung 5 auch von dem Gehäuse 3 gelöst werden kann. Ist die Abdeckung 5 von dem Gehäuse 3 gelöst, liegt der Aufnahmeschlitz des Kartenlesers 4 frei, sodass er für die Aufnahme oder Entnahme der Karte zugänglich ist.

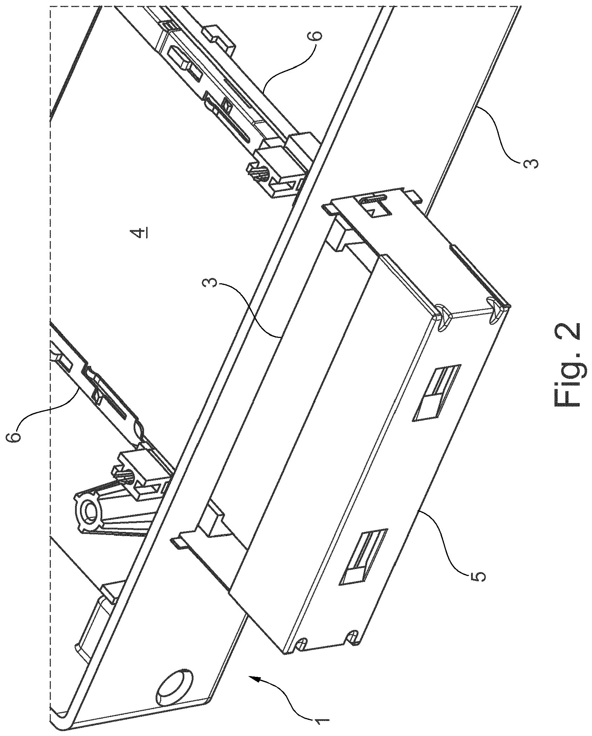

Figur 2 zeigt das gleiche elektronische Gerät 1 wie Figur 1, jedoch jetzt mit geöffnetem Oberteil. Hier ist erkennbar, dass der überwiegende Teil des Kartenlesers 4 innerhalb des Gehäuses 3 des elektronischen Gerätes 1 angeordnet ist. Bei diesem Ausführungsbeispiel ist (muss aber nicht) der Kartenleser 4 als separate Einheit innerhalb des elektronischen Gerätes eingesetzt. Hierzu sind prinzipiell Halterungen 6, zum Beispiel in Form von Führungsschienen, in dem Gehäuse 3 vorhanden. Diese Halterung 6 bewirkt, dass der Kartenleser 4 durch die Öffnung 2 in das Gehäuse 3 eingeführt werden kann. Weitere erforderliche Bauteile, wie zum Beispiel Steckverbindungen für Signalübertragungen, Stromversorgung und dergleichen, sind zwar vorhanden, aber nicht dargestellt.

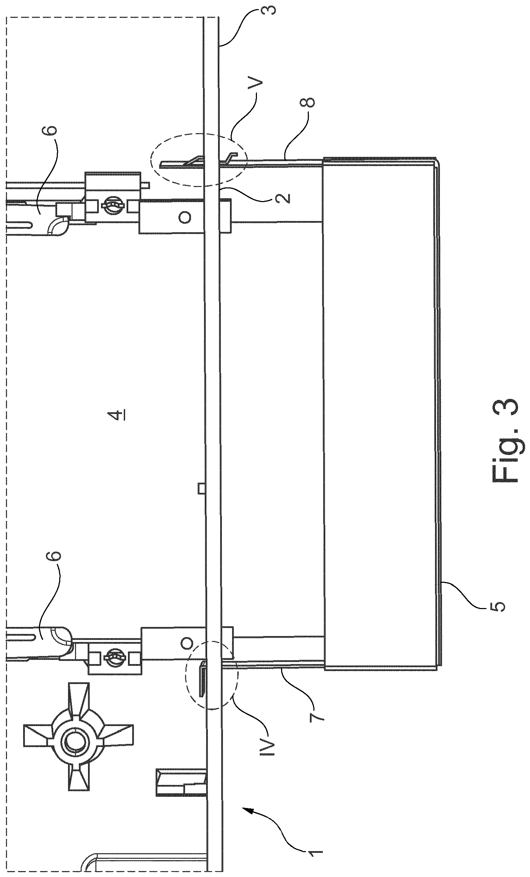

Figur 3 zeigt die ersten Details der Abdeckung 5.
   Die Abdeckung 5 weist ein Seitenteil 7 und ein Seitenteil 8 auf. In Figur 3 sind die beiden Seitenteile 7, 8 unterschiedlich voneinander gestaltet. Es ist aber auch denkbar, diese beiden Seitenteile 7, 8 gleichartig zu gestalten. So kann beispielsweise das in Figur 3 gezeigte Seitenteil 8 auch so gestaltet sein wie das Seitenteil 7 oder umgekehrt.
   Das Seitenteil gemäß Figur 3 weist einen Endbereich auf, der in Figur 4 im Detail mit IV bezeichnet und im Folgenden noch näher beschrieben wird. Auch das Seitenteil 8 ist mit V näher bezeichnet, wobei dieser Bereich V im Detail in Figur 5 gezeigt ist und dort weiter beschrieben wird.

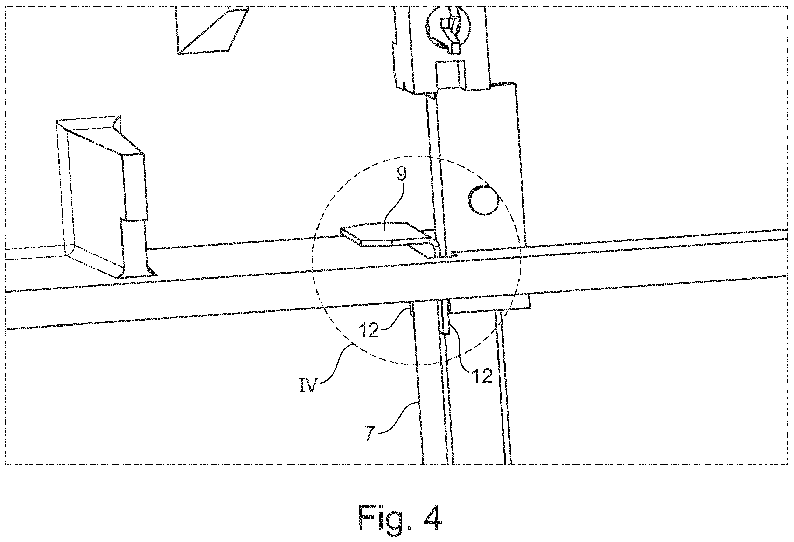

In Figur 4 ist der Bereich IV des Seitenteiles 7 gemäß Figur 3 im Detail dargestellt. In diesem Fall weist das Seitenteil 7 in seinem Endbereich eine Lasche 9 auf. Diese Lasche 9 ist abgewinkelt, vorzugsweise in einem Bereich um etwa 90 Grad.

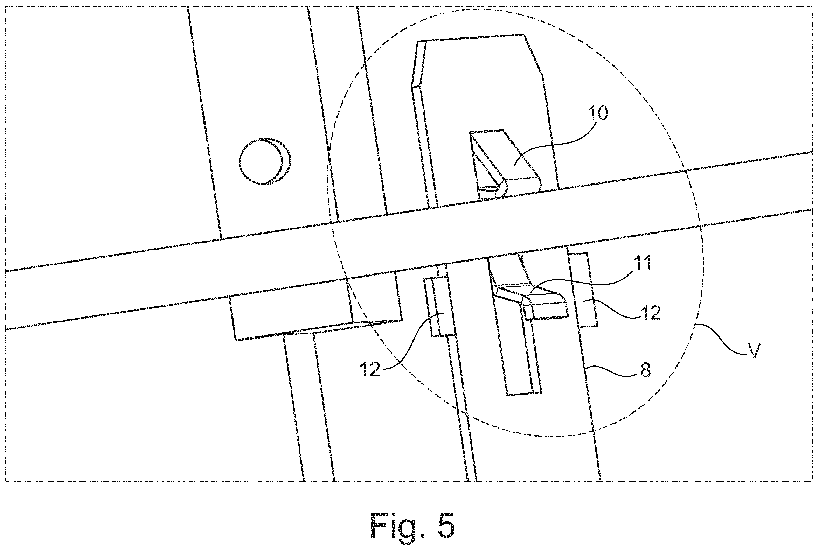

Figur 5 zeigt den Endbereich des Seitenteiles 8. Das Seitenteil 8 weist zumindest eine Lasche 10 auf. Ergänzend zu dieser Lasche 10 kann auch eine Lasche 11 vorhanden sein. Weiterhin sind Vorsprünge 12 vorhanden.
   Die Detailausgestaltungen der Seitenteile 7, 8 mit ihren Bereichen IV und V werden weiter unten, auch hinsichtlich ihrer Funktionsweise, noch näher erläutert.

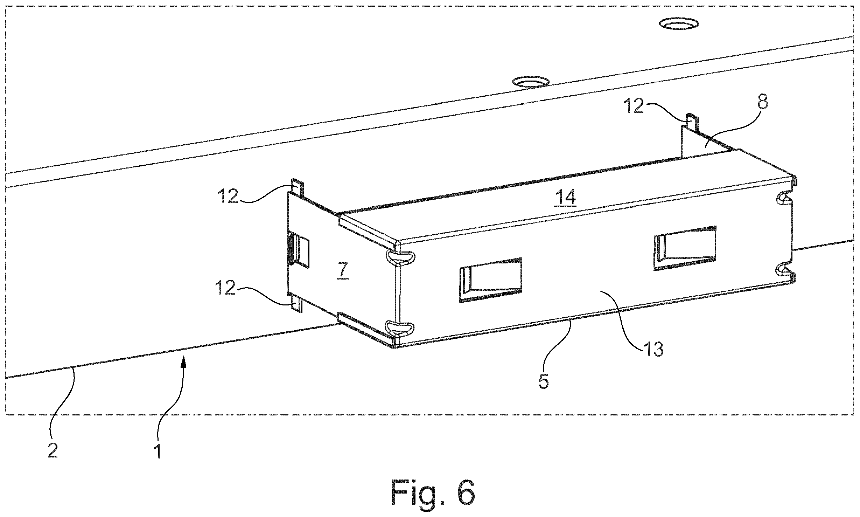

Figur 6 zeigt die Abdeckung 5, die über ihre Seitenteile 7, 8 an dem Gehäuse 3 des elektronischen Gerätes 1 festgelegt ist. Hierbei ist erkennbar, dass die Abdeckung 5 die beiden Seitenteile 7, 8 aufweist, zwischen denen eine Stirnseite 13 angeordnet ist. Zusätzlich hierzu können auch oberhalb und unterhalb der Stirnseite 13 ein Oberteil 14 und ein darunter angeordnetes, jedoch nicht dargestelltes Unterteil vorhanden sein.

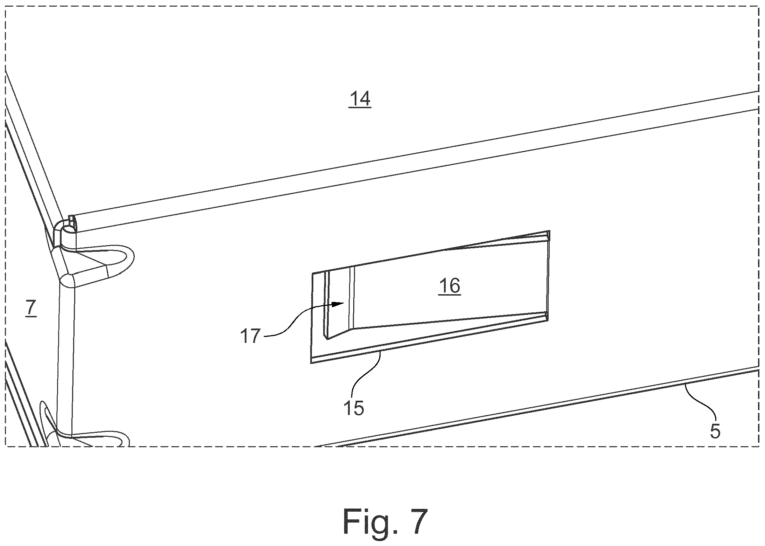

Figur 7 schließlich zeigt die Abdeckung 5, die einen Ausschnitt 15 aufweist. Ausgehend von der einen Seite des Ausschnittes 15 erstreckt sich eine nach innen gerichtete Federlasche 16. Die Federlasche 16 kann, muss aber nicht eine Abwinklung 17 aufweisen. Die Federlasche 16 ist in Richtung des Aufnahmeschlitzes des Kartenlesers 4 gerichtet. Die Federlasche 16 bewirkt, dass sie mit ihrem Endbereich, insbesondere der Abwinklung 17, auf den Aufnahmeschlitz bzw. nur auf die darin befindliche Karte oder beide drückt, um so zu verhindern, dass sich die in den Kartenleser eingesetzte Karte aus diesem herausbewegen kann, wenn die Abdeckung 5 in ihrer Sollposition an dem Gehäuse 2 angeordnet ist.
   Zur Montage und Demontage der Abdeckung 5:
Figur 6 zeigt, wie auch die meisten übrigen Figuren, dass die Abdeckung 5 in ihrer Sollposition an dem Gehäuse 3 des elektronischen Gerätes festgelegt ist. Hierzu sind die Seitenteile 7, 8 in die Öffnung 2 teilweise eingeführt worden. Dieses Einführen erfolgt so weit in Richtung des Inneren des Gehäuses 3, bis die Vorsprünge 12 an der Oberfläche einer Seite des Gehäuses 3, insbesondere einer Seitenwand, zur Anlage kommen. Die Erstreckung der Seitenteile 7, 8 und die Anordnung der Vorsprünge 12 an diesen Seitenteilen 7, 8 ist dabei so gewählt, dass die Stirnseite 13 an der vorderen Stirnseite des Kartenlesers 4 mit seinem Aufnahmeschlitz zur Anlage kommt (wenn die Federlaschen 16 nicht vorhanden sind) oder die Stirnseite 13 auf Abstand zur Stirnseite des Kartenlesers 4 angeordnet wird und dadurch Raum verbleibt, dass die zumindest eine Federlasche 16 auf die Stirnseite des Kartenlesers 4 einwirken kann.

Um die Abdeckung 5 einfach an dem Gehäuse 3 festlegen (montieren) und wieder entfernen (demontieren) zu können, weisen die beiden Seitenteile 7, 8 gemäß Figur 3 die speziellen Endbereiche auf, die in den Figuren 4 und 5 mit IV und V im Detail dargestellt sind.

Bei Betrachtung der Figur 3 wird die Abdeckung, die an dem Gehäuse 3 zunächst festgelegt ist (um das Herausbewegen der Karte aus dem Kartenleser 4 zu verhindern), um einen gedanklichen Punkt im Abwinklungsbereich der Lasche 9 des Seitenteiles 7 verschwenkt. Dies erfolgt dadurch, dass die Lasche 10 an der zugehörigen Seite der Öffnung 2 vorbeibewegt wird, in dem sie aufgrund der Federkraft zurückbewegt wird. Gleichzeitig ist die Federkraft der Lasche 10 aber so hoch, dass diese das Seitenteil 8 in der in Figur 3 gezeigten Position hält. Wenn also entsprechend hohe Kräfte, die im normalen Betrieb des elektronischen Gerätes 1 nicht auftreten, aufgebracht werden, ist es möglich, die Abdeckung 5 um den gedanklichen Drehpunkt im Bereich der Lasche 9 des Seitenteiles 7 zu verschwenken. Nachdem dies erfolgt ist (das heißt, dass der komplette Endbereich des Seitenteiles 8 aus dem Gehäuse 3 herausgeschwenkt wurde), kann durch eine leichte Seitwärtsbewegung auch das Seitenteil 7 mit seiner Lasche 9 aus der Öffnung 2 des Gehäuses 3 des elektronischen Gerätes herausbewegt werden. Dadurch kann die Abdeckung 5 vollständig von dem Gehäuse 3 entfernt werden, sodass der Aufnahmeschlitz des Kartenlesers 4 zugänglich ist. Dann kann dort die Karte eingesetzt oder eine eingesetzte Karte entnommen werden.

Ist die Abdeckung 5 von dem Gehäuse 3 des elektronischen Gerätes 1 entfernt, erfolgt das Festlegen der Abdeckung 5 an dem Gehäuse 3 in der umgekehrt beschrieben Reihenfolge. Hierzu wird die Lasche 9 des Seitenteiles 7 durch die Öffnung 2 geführt. Dabei verhindern die Vorsprünge 12 des Seitenteiles 7 ein unzulässig weites Hineinführen des Seitenteiles 7 durch die Öffnung 2 in das Innere des Gehäuses 3. Durch dieses Zusammenspiel von Lasche 9 und zugehörigen Vorsprüngen 12 (oder auch nur einem Vorsprung 12) des Seitenteiles 7 wird ein Drehpunkt gebildet, um den die Abdeckung 5, dessen Seitenteil 8 mit seinem Ende noch nicht in die Öffnung 2 hineingeführt wurde, von dem Gehäuse 3 beabstanded ist. Erst nachdem die Abdeckung 5 um den gedanklichen Drehpunkt im Bereich der Abwinklung der Lasche 9 weiter verschwenkt wird (bei Betrachtung der Figur entgegen des Uhrzeigersinnes) wird auch der Endbereich des Seitenteiles 8 in die Öffnung 2 des Gehäuses eingeführt. Aufgrund des Abstandes der beiden Seitenteile 7, 8, der nahezu dem Abstand der zugehörigen Öffnung 2 entspricht, wird bewirkt, dass die Lasche 10, die federnd ausgestaltet ist, durch die Seitenwand des Gehäuses 3 niedergedrückt wird, sodass der Endbereich mit der Lasche 10 des Seitenteiles 8 in die Öffnung 2 eingeführt wird. Auch hier verhindert der eine Vorsprung, insbesondere zwei Vorsprünge 12, das weitere Hineinführen des Endbereiches des Seitenteiles 8 durch die Öffnung 2 in das Gehäuse 3. Somit wird durch das Zusammenspiel von Lasche 10 und Vorsprung 12 auch dieser Bereich des Seitenteiles 8 an dem Gehäuse 3 festgelegt. Insgesamt wird durch die vorstehend beschriebene Vorgehensweise und Ausgestaltung der Abdeckung 5, insbesondere deren Seitenteile 7, 8 mit den Details (dargestellt in IV und V) in vorteilhafter Weise bewirkt, dass die Abdeckung 5 fest an dem Gehäuse 3 festgelegt, aber dennoch wieder entfernt werden kann, um den Aufnahmeschlitz des Kartenlesers 4 abzudecken und die darin befindliche Karte in ihrer Sollposition zu halten.

Wie vorstehend beschrieben wird die federnde Lasche 10 durch Aufbringen der entsprechenden Kräfte aus ihrer dargestellten Position herausbewegt, damit sie an dem Seitenrand der Öffnung 2 vorbeigleiten kann, wenn die Abdeckung 5, genauer das betreffenden Ende des Seitenteiles 8, aus dem Gehäuse 3 herausgeführt oder in das Gehäuse 3 eingesetzt wird. Um die hierfür erforderlichen Kräfte zu minimieren, ist die Lasche 11 vorgesehen, die außerhalb des Gehäuses 3 verbleibt. Die Lasche 11 ist mit der Lasche 10 in einer solchen Weise verbunden, dass durch das Drücken auf die von außen zugängliche Lasche 11 (in Richtung des Seitenteiles 7) auch die Lasche 10 aus ihrer dargestellten Endposition herausbewegt wird. Somit ist es möglich, die bei Einsetzen, insbesondere aber auch die beim Herausbewegen erforderlichen Kräfte dadurch zu minimieren, dass auf die Lasche 11 gedrückt wird, sodass auch dadurch die Lasche 10 in Richtung des Kartenlesers 4 bewegt wird. Dadurch lässt sich der Endbereich des Seitenteiles 7 wesentlich einfacher, das heißt mit wesentlich geringeren Kräften, aus der Öffnung 2 bzw. in die Öffnung 2 heraus- bzw. hineinbewegen.

Alternativ zu der in Figur 3 dargestellten Ausführung der Seitenteile 7, 8 ist es selbstverständlich auch denkbar, das dort dargestellte Seitenteil 7 durch ein entsprechendes Seitenteil 8 mit seinen Details (dargestellt in V in Figur 5) zu ersetzen. Es kann eine Federlasche 16 vorhanden sein, aber auch mehr als eine Federlasche 16, zum Beispiel zwei, drei oder mehr. Die jeweilige Federlasche 16 wird von der Abdeckung 5 gebildet (insbesondere ausgestanzt) oder als separates Bauteil gefertigt und dann an der Abdeckung 5 befestigt (verklebt, vernietet, verpresst, verschraubt, verlötet, verschweisst oder dergleichen). Die Abdeckung 5 besteht aus Metall, kann aber alternativ auch aus Kunststoff gefertigt sein. Ebenso ist der zumindest eine Vorsprung 12 Bestandteil der Abdeckung 5, kann aber auch separat hergestellt und dann an der Abdeckung 5 befestigt werden.

Besonders wichtig ist das elektronisches Gerät mit einem Kartenleser und einer Abdeckung für den Kartenleser für mobile, insbesondere automobile Anwendungen, da mit der Abdeckung sichergestellt ist, dass die Karte auch bei starken Beanspruchungen (vor allen Dingen Stösse, Vibrationen, Temperaturen) in dem Kartenleser in ihrer Sollposition verbleibt.

### Bezugszeichenliste

- 1.: Elektronisches Gerät
- 2.: Öffnung
- 3.: Gehäuse
- 4.: Kartenleser
- 5.: Abdeckung
- 6.: Halterung
- 7.: Seitenteil
- 8.: Seitenteil
- 9.: Lasche
- 10.: Lasche
- 11.: Lasche
- 12.: Vorsprung
- 13.: Stirnseite
- 14.: Oberteil
- 15.: Ausschnitt
- 16.: Federlasche
- 17.: Abwinklung

## Patentansprüche

1. Elektronisches Gerät (1) mit einem eine Öffnung (2) aufweisenden Gehäuse (3), wobei das Gerät (1) einen Kartenleser (4) mit einem Aufnahmeschlitz zur Aufnahme einer Karte aufweist, wobei der Aufnahmeschlitz mit einer lösbaren und an dem Gehäuse (3) festlegbaren Abdeckung (5) verriegelt ist, **dadurch gekennzeichnet, dass** die Abdeckung (5) zwei Seitenteile (7, 8) aufweist, mit denen die Abdeckung (5) lösbar an dem Gehäuse (3) angeordnet ist, und dass das eine Seitenteil (7) der Seitenteile (7, 8) endseitig eine abgewinkelte Lasche (9) aufweist und dass das andere Seitenteil (8) zumindest eine Lasche (10), vorzugsweise zwei beabstandet zueinander angeordnete Laschen (10, 11), aufweist.

2. Elektronisches Gerät (1) nach Anspruch 1, **dadurch gekennzeichnet, dass** das zumindest eine Seitenteil (7, 8) zumindest einen an dem Gehäuse (3) zur Anlage kommenden Vorsprung (12) aufweist.

3. Elektronisches Gerät (1) nach einem der vorhergehenden Ansprüche, **dadurch gekennzeichnet, dass** die Abdeckung (5) eine Stirnseite (13) aufweist, die zumindest teilweise, vorzugsweise vollständig, zumindest den Aufnahmeschlitz der Karte abdeckt.

4. Elektronisches Gerät (1) nach Anspruch 3, **dadurch gekennzeichnet, dass** die Stirnseite (13) zumindest eine in Richtung des Aufnahmeschlitzes gerichtete Federlasche (16) aufweist.

5. Elektronisches Gerät (1) nach Anspruch 4, **dadurch gekennzeichnet, dass** die Federlasche (16) endseitig eine Abwinklung (17) aufweist.

6. Elektronisches Gerät (1) nach einem der vorhergehenden Ansprüche, **dadurch gekennzeichnet, dass** die Abdeckung (5) als ein Stanzbiegeteil ausgebildet ist.

7. Elektronisches Gerät (1) nach einem der vorhergehenden Ansprüche, **dadurch gekennzeichnet, dass** die Abdeckung (5) und eine Stirnseite des Kartenlesers (4) über die eine Seite des Gehäuses (3) des elektronischen Gerätes (1) überstehen.

## Claims

1. Electronic device (1) comprising a housing (3) which has an opening (2), wherein the device (1) has a card reader (4) with a receiving slot for receiving a card, wherein the receiving slot is locked by a cover (5) which can be detached and can be fixed to the housing (3), **characterized in that** the cover (5) has two side parts (7, 8) with which the cover (5) is arranged on the housing (3) in a detachable manner, and **in that** one side part (7) of the side parts (7, 8) has an angled tab (9) at the end and **in that** the other side part (8) has at least one tab (10), preferably two tabs (10, 11) which are arranged in a manner spaced apart from one another.

2. Electronic device (1) according to Claim 1, **characterized in that** the at least one side part (7, 8) has at least one projection (12) which comes to rest against the housing (3).

3. Electronic device (1) according to one of the preceding claims, **characterized in that** the cover (5) has an end face (13) which at least partially, preferably completely, covers at least the receiving slot in the card.

4. Electronic device (1) according to Claim 3, **characterized in that** the end face (13) has at least one spring tab (16) which is directed in the direction of the receiving slot.

5. Electronic device (1) according to Claim 4, **characterized in that** the spring tab (16) has an angled portion (17) at the end.

6. Electronic device (1) according to one of the preceding claims, **characterized in that** the cover (5) is in the form of a stamped and bent part.

7. Electronic device (1) according to one of the preceding claims, **characterized in that** the cover (5) and an end face of the card reader (4) project beyond one side of the housing (3) of the electronic device (1) .

## Revendications

1. Appareil électronique (1) doté d'un boîtier (3) présentant une ouverture (2), le boîtier (3) présentant un lecteur (4) de cartes doté d'une fente de réception de carte, la fente de réception étant verrouillée par un couvercle libérable (5) qui peut être fixé sur le boîtier (3),
**caractérisé en ce que**
le couvercle (5) présente deux parties latérales (7, 8) par lesquelles le couvercle (5) est disposé de manière libérable sur le boîtier (3),
**en ce que** l'une (7) des parties latérales (7, 8) présente à son extrémité une patte coudée (9) et
**en ce que** l'autre partie latérale (8) présente au moins une patte (10) et de préférence deux pattes (10, 11) disposées à distance l'une de l'autre.

2. Appareil électronique (1) selon la revendication 1, **caractérisé en ce que** la ou les parties latérales (7, 8) présentent au moins une saillie (12) qui vient se placer sur le boîtier (3).

3. Appareil électronique (1) selon l'une des revendications précédentes, **caractérisé en ce que** le couvercle (5) présente une partie frontale (13) qui recouvre au moins en partie et de préférence complètement au moins la fente de réception de la carte.

4. Appareil électronique (1) selon la revendication 3, **caractérisé en ce que** le côté frontal (13) présente au moins une patte élastique (16) orientée en direction de la fente de réception.

5. Appareil électronique (1) selon la revendication 4, **caractérisé en ce que** la patte élastique (16) présente à son extrémité un coude (17).

6. Appareil électronique (1) selon l'une des revendications précédentes, **caractérisé en ce que** le couvercle (5) est configuré comme pièce estampée et cintrée.

7. Appareil électronique (1) selon l'une des revendications précédentes, **caractérisé en ce que** le couvercle (5) et un côté frontal du lecteur (4) de cartes débordent au-delà d'un côté du boîtier (3) de l'appareil électronique (1).
